(19) 

Europäisches
Patentamt

European
Patent Office

Office européen
des brevets

(11) **EP 2 697 291 B1**

(12) **EUROPEAN PATENT SPECIFICATION**

(45) Date of publication and mention
of the grant of the patent:
**06.04.2016 Bulletin 2016/14**

(21) Application number: **12770886.5**

(22) Date of filing: **10.04.2012**

(51) Int Cl.:
***C08J 5/00*** *(2006.01)*

(86) International application number:
**PCT/SE2012/050381**

(87) International publication number:
**WO 2012/141645 (18.10.2012 Gazette 2012/42)**

(54) **FIBER-REINFORCED COMPOSITE AND A METHOD FOR MANUFACTURING A FIBER-REINFORCED COMPOSITE**

FASERVERSTÄRKTER VERBUNDWERKSTOFF UND VERFAHREN ZUR HERSTELLUNG EINES FASERVERSTÄRKTEN VERBUNDWERKSTOFFS

COMPOSITE RENFORCÉ PAR DES FIBRES ET PROCÉDÉ DE FABRICATION D'UN COMPOSITE RENFORCÉ PAR DES FIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.04.2011 EP 11162066**

(43) Date of publication of application:
**19.02.2014 Bulletin 2014/08**

(73) Proprietor: **Södra Skogsägarna Ekonomiska Förening**
**351 89 Växjö (SE)**

(72) Inventors:
• **BOLDIZAR, Antal**
  **S-51142 Kinnahult (SE)**
• **ARIÑO, Ruth**
  **S-41657 Göteborg (SE)**

(74) Representative: **Valea AB**
**Anna Lindhs Plats 4**
**211 19 Malmö (SE)**

(56) References cited:
| | |
|---|---|
| EP-A1- 1 070 782 | WO-A1-2010/034946 |
| GB-A- 2 140 314 | JP-A- 63 033 442 |
| US-A- 3 645 939 | US-A- 3 645 939 |
| US-A- 5 096 406 | US-A- 5 709 933 |
| US-A- 5 985 429 | US-A- 5 985 429 |
| US-A1- 2006 173 105 | US-A1- 2006 173 105 |
| US-A1- 2009 130 443 | US-B1- 6 280 667 |

## Description

## Technical field of the invention

The present invention relates to fiber-reinforced composites comprising cellulosic fibers and a thermoplastic matrix. The present invention also relates to an improved method for manufacturing fiber-reinforced composites comprising a thermoplastic matrix and cellulosic fibers and to fiber-reinforced composites manufactured by said method.

## Background

Fiber-reinforced composites are becoming more and more important as alternatives to metals as they are strong and lightweight and have good impact resistance and load bearing ability. Synthetic fibers, such as those made from glass and carbon, are the most commonly used fibers in such applications.

The interest of using natural fibers, such as fibers made from cellulose, cotton, jute, flax, ramie, sisal and hemp, as reinforcement material in composites, especially in composites comprising a thermoplastic matrix, has increased considerably in recent years. For example, both in the automotive and packaging industry, the use of natural fibers as reinforcement material has increased. This is also true for other sectors of the industry, such as the construction industry and computer industry. It is the properties of said composites, such as renewability, biodegradability, practically unlimited availability, low cost, low density, high specific stiffness, low abrasiveness to melt processing equipment and physiological harmlessness which make them attractive. However, the replacement of synthetic fiber with natural fibers will, at least in certain applications, be very difficult mostly because natural fibers have poorer mechanical properties than synthetic fibers.

The most commonly used thermoplastic matrices for fiber-reinforced composites contain polyethylene or polypropylene but other thermoplastic matrices have also been used. There are, however, obstacles to overcome when using e.g. polypropylene or polyethylene as thermoplastic matrices because of the non-polar surface of these thermoplastics and of the natural fibers. This non-polarity reduces the adhesion between the fibers and thermoplastic matrix, which leads to poor adhesion. This poor adhesion interferes with the mechanical mixing of the thermoplastic matrix and the natural fibers, thus causing poor dispersion of the fibers in the thermoplastic matrix, which, in turn, will affect the stiffness and strength of the product. One solution to this problem has been to add one or more compatibilizers and/or coupling agents to the mixture of thermoplastic matrix and natural fibers, said compounds having the ability to change the polarity of the fiber. Examples of such compounds are mentioned in e.g. US 2003/0228454. Maleic anhydride-, silane-, isocyanate- and titanate-based compounds are the most commonly used compatibilizers for natural fiber-reinforced composites. The addition of these compounds causes problems as it is difficult to control the behavior of these compounds during the manufacturing process of the fiber-reinforced composite, e.g. the compounds might not be sufficiently dispersed in the thermoplastic matrix and will therefore not function properly in the composite, which may influence the mechanical properties of the composite. Furthermore, it may cause discoloration and will also be difficult to control what will happen with these compounds during the use of the composite, e.g. they maybe emitted into the environment.

High temperatures are needed for processing both polyethylene and polypropylene. Natural fibers will start to degrade at relatively low temperatures, affecting the properties of the obtained product, such as the mechanical strength. Hence, there is a need for manufacturing processes for fiber-reinforced composites which can be performed at lower process temperatures, i.e. at temperatures below 200°C.

Another difficulty associated with producing natural fiber-reinforced composites is that natural fibers have a tendency to form bundles, i.e. they will form non-dispersed fiber aggregates. These aggregates reduce the mechanical properties of the composite. One way to try to overcome this problem is to process the composite material in extruders, hence using shearing forces. Such methods are described in J. Zhang et al. (J. Appl. Polymer Sci. 113, 2081-2089, (2009)) and J. Morán et al. (J. Appl. Polymer Sci. 103, 228-237 (2007)) and US 5709933. US 5709933 discloses an extrusion process for continuous extrusion of polyethylene and cellulose based fibers in a matrix and a composite cellulose fiber reinforced polyolefin. Coupling/mixing agents are added and also blending additives such as EEA. However, the shearing forces of the extruder are not strong enough to sufficiently break-up the fiber aggregates and therefore there will not be a satisfactory dispersion of the fibers.

Further, many of the manufacturing methods use complex process equipment in order to try to obtain good dispersion of the fibers in the thermoplastic matrix, as can be seen in e.g. WO 99/56936. Hence, there exists a need for improved and simplified methods for manufacturing fiber-reinforced thermoplastic composites.

US 2009/0130443 discloses synthetic organic fiber pellets comprising at least 80 weight% of a synthetic organic fiber chosen from polyalkylene terephthalates, polyalkylene naphthalates, polyamides, polyolefins, polyacrylonitrile, and combinations thereof, and from 2 to 20 weight% of one or more waxes. The waxes are selected from polyolefin waxes, polytetrafluoroethylene waxes, ethylene acrylic acid waxes, Fischer-Tropsch waxes, paraffin waxes, Carnauba waxes, Montan waxes and combinations thereof. A method for producing said synthetic organic fiber pellets is also disclosed. The document discloses further polypropylene composite comprising said pellets. The problems associated with these composites and the method disclosed therein are the same as already mentioned above.

US5985429 discloses composite polymer/fiber thermoplastic materials used for the fabrication of structural members such as windows and doors. The polymer and fiber can be combined and formed into a pellet using a thermoplastic extrusion process.

EP 1070782 discloses a discontinuous lignocellulose fiber for use as reinforcing filler for thermoplastic composite compositions. The fiber filler includes a significant percentage by weight of long, "hair-like" fibers. EP 1070782 discloses that additional components such as coupling agents, foaming agents, coloring, UV stabilizers and the like, may optionally be added to the composite during or prior to blending. The preferred coupling agents include maleated or maleic anhydride grated polypropylene or polyethylene, ethylene methacrylic or acrylic acid. The amount of coupling agent in the composite composition is preferably up to about 10 % by weight of the composite. Concentrations of the preferred coupling agents in excess of about 10 % by weight yield little, if any, gain in the performance of the composite. EP 1070782 also provides a process for preparing a moldable thermoplastic composite composition, the process comprising the steps of: providing about 20 to about 50 % by weight of the composite composition of a discontinuous lignocellulose fiber filler, the discontinuous lignocellulose fiber filler comprising at least about 20 % by weight of discontinuous lignocellulose fibers having a length of at least about 15 millimeters and a diameter of less than 0.50 millimeters, providing about 50 to about 80 % by weight of the composite composition of a thermoplastic, blending the discontinuous lignocellulose fiber filler and the thermoplastic, extruding the blended discontinuous lignocellulose fiber filler and thermoplastic through a single screw extruder at an extruder operating temperature of less than about 230 °C. The problems associated with these composites and the method disclosed therein are the same as already mentioned above.

## Summary of the invention

Accordingly, it is an object of the present invention to overcome the above-mentioned problems and difficulties.

There is provided a method for manufacturing a fiber-reinforced composite according to appended claim 1. Further, there is provided a fiber-reinforced composite according to appended claim 8 as well as the use of said fiber-reinforced composite according to appended claim 9.

Hence, the present invention relates to fiber-reinforced composite comprising cellulosic fibers, a thermoplastic matrix and no or at least one additive, wherein said thermoplastic matrix essentially contains ethylene acrylic acid copolymer (EAA). The present invention also relates to a composite mixture comprising cellulosic fibers, a thermoplastic matrix and no or at least one additive, wherein said thermoplastic matrix essentially contains ethylene acrylic acid copolymer. According to the invention, the thermoplastic matrix may contain only EAA, i.e. consist of EAA only. The fiber-reinforced composites of the present invention as defined hereinabove or hereinafter have the advantage that no compatibilizers and/or coupling agents need to be added for improving the adhesion between EAA and the cellulose, as the adhesion is sufficient.

The present invention also relates to a method for producing fiber-reinforced composites by using elongation dispersive mixing. Said method will provide composites having very good tensile mechanical properties as it will provide for good dispersion of the fibers in the thermoplastic matrix by the use of high pressure, i.e. a pressure of at least 100 bar, i.e. a pressure of 100 bar or more, which will significantly reduce the fiber aggregates contained within the thermoplastic matrix. Furthermore, the disintegration of aggregates is further improved by the substantial elongation of the melt comprising the thermoplastic matrix and the cellulosic fibers.

Hence, the present invention provides fiber-reinforced composites having a significantly reduced number of fiber aggregates and improved tensile mechanical properties as compared to prior art composites as said fiber-reinforced composites have more disentangled cellulosic fibers, thus resulting in that the contained amount of cellulosic fibers is used more effectively, whereby improved tensile mechanical properties are obtained.

The present invention also relate to the use of the fiber-reinforced composites according to the present invention in different applications.

## Definitions

In the present context, the terms "thermoplastic matrix essentially contains" and "thermoplastic matrix essentially containing" mean that the thermoplastic matrix contains at least 70 weight% EAA, i.e. 70 weight% or more, such as at least 80 weight% EAA, i.e. 80 weight% or more, such as at least 90 weight% EAA, i.e. 90 weight% or more.

In the present context, the term "agglomerates" is intended to mean particles, such as but not limited to pellets, formed by the more or less tightly joining of the cellulosic fibers and the thermoplastic polymer.

In the present context, the term "aggregates" is intended to mean clusters of more or less joined and/or entangled cellulosic fibers.

The term "cellulosic fibers" in the present context relates to fibers from wood, woody plants and certain non-woody plants, cellulose-based recycled and regenerated fibers. Woody plants include, but without limitation to, for instance deciduous (hardwood) and coniferous (softwood) trees. Non-woody plants include for instance cotton, flax, esparto, grass, milkweed, straw, jute, hemp and bagasse. The term "cellulosic fibers" is intended to also include pulp fibers, such as kraft pulp fibers, dissolving pulp fibers, mechanical pulp fibers, sulfite pulp fibers and regenerated fibers. The term "regenerated fibers" is intended to include rayon, viscose, modal, lyocell, tencel, and cuprammonium rayon.

The term "elongation dispersive mixing" is intended to mean a mixing operation performed by elongational flow of the melt mixture, i.e. it is intended to mean a mixing operation performed by subjecting the melt mixture to conditions producing an elongational flow in the melt mixture.

The term "elongational flow" is defined as an increasing velocity gradient along the direction of flow of the melt. The velocity gradient may be, but not limited thereto, produced by reducing the cross sectional area in the flow direction.

The term "additive" as used in the present context includes inorganic additives, which are selected from the group consisting of talc, calcium carbonate, calcium hydroxide, barium sulfate, mica, calcium silicate, clay, kaolin, silica, alumina, wollastonite, magnesium carbonate, magnesium hydroxide, titanium oxide, titanium dioxide zinc oxide, zinc sulfate, and combinations thereof, and colorants, lubricants, process aids, heat stabilizers, light stabilizers, biocides and flame resistant agents. The composite according to the present invention may contain different types of additives, such as up to 10 different types of additives.

The term "thermoplastic" is intended to include polymers that turn into a liquid when heated and freezes (solidifies) to a solid state when cooled sufficiently. Examples, but not limited thereto, of thermoplastics are polyethylene, polypropylene and copolymers therefore. Ethylene acrylic acid copolymer is another example.

In the present context the term "mixture" is intended to define a material system made up by two or more different substances which are mixed together but are not combined (reacted) chemically.

The term "matrix" is intended to be defined in the present context is, unless stated otherwise, as the continuous material part surrounding the reinforcing fibers.

Brief description of the figures

The invention will be illustrated in the following with reference to the appended drawings therein:

Figure 1    shows microscope pictures of the center of different injection-molded samples which have been obtained by different methods;

Figure 2    shows injection molded samples that has been obtained from different methods; and

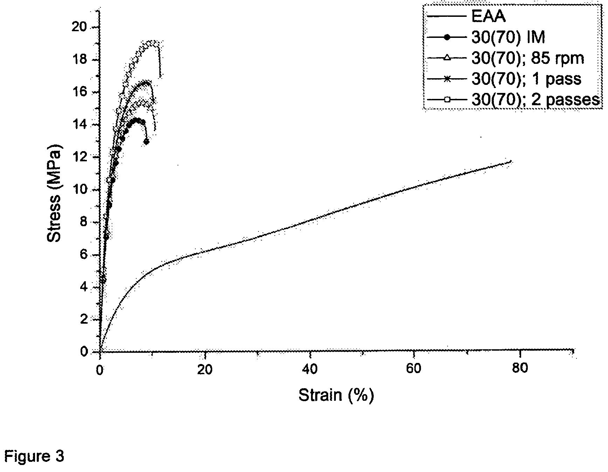

Figure 3    shows strain-stress curves for injection-molded 30(70) samples under different melt mixing conditions.

**Detailed description of the invention**

The present invention relates to fiber-reinforced composites comprising cellulosic fibers, a thermoplastic matrix and one or more additive, wherein said thermoplastic matrix essentially contains ethylene acrylic acid copolymer (EAA). The thermoplastic matrix may only contain EAA, i.e. consist of EAA only.

Furthermore, the fiber-reinforced composites according to the present invention as defined hereinabove or hereinafter may consists of cellulosic fibers, a thermoplastic matrix essentially containing ethylene acrylic acid copolymer and no or at least one additive.

It has surprisingly been found that EAA have such high adhesion to cellulosic fibers that there is no need to add a compatibilizer and/or coupling agent to the thermoplastic mixture in order to promote the compatibility and mixing between EAA and the cellulosic fibers. This is a huge advantage as it provides a more simplified manufacturing process for the fiber-reinforced composite and also provides a more homogenized mixture with considerably improved dispersion of the fibers in the mixture. Furthermore, as EAA has a low melting temperature, the process temperature for the manufacturing the fiber-reinforced composites can be lowered, which substantially reduces the risk of degradation of the cellulosic fibers. As a result of the homogenized mixture and the reduced degradation of the fibers and the compatibility between the EAA and the fibers, the fiber-reinforced composites of the present invention as defined hereinabove and hereinafter show excellent mechanical performance.

Ethylene-acrylic acid copolymer (EAA) consists of a carbon backbone with occasional pendant carboxyl groups. EAA is used as compatibilizer, binder in non-woven fabrics, coating and interfacial agent. EAA has never been used as the major or only component of a thermoplastic matrix in a fiber-reinforced composite.

The fiber-reinforced composites according to the present invention as defined hereinabove or hereinafter may contain cellulosic fibers in the range of from 10 to 40 weight%, such as in the range of from 20 to 40 weight%, such as in the range of from 25 to 35 weight%, such as in the range of from 28 to 30 weight%. The fiber-reinforced composite may contain 25, 26, 27, 28, 29, 30, 31, 32, 33, 34 or 35 weight% cellulosic fibers.

Furthermore, the fiber-reinforced composite according to the present invention as defined hereinabove or hereinafter may contain cellulosic fibers having a length in the in the range of from 0.1 to 6.0 mm. However, other suitable lengths of the cellulosic fibers are in the range of from 0.1 to 1.5 mm, from 0.3 to 3.0 mm, and from 2.0 to 5.0 mm. The length of the cellulosic fibers depends on the type of cellulosic fiber being used.

According to fiber-reinforced composite as defined hereinabove or hereinafter, the ethylene acrylic acid copolymer comprises acrylic acid in the range of from 3 to 10 weight%, such as 7 weight% acrylic acid, such as 3 weight% acrylic acid, such as 4, 5 or 6 weight% acrylic acid. However, the EAA may comprise up to 20 weight% acrylic acid.

Further, the present invention also relates to a fiber-reinforced composite consisting of a thermoplastic matrix containing ethylene acrylic acid copolymer only, which EAA comprises 3 or 7 weight% acrylic acid and no or at least one additive and from 10 to 40 weight% cellulosic fibers, such as about 30 weight% cellulosic fibers. Furthermore, the present invention relates to a fiber-reinforced composite consisting of from 10 to 40 weight% cellulosic fibers, such as about 30 weight% cellulosic fibers and a thermoplastic matrix essentially containing ethylene acrylic acid copolymer, which EAA comprises 3 or 7 weight% acrylic acid and no or at least one additive.

The present invention also relates to a composite mixture comprising cellulosic fibers, a thermoplastic matrix and no or at least one additive, wherein said thermoplastic matrix essentially contains ethylene acrylic acid copolymer (EAA). According to the present invention said thermoplastic matrix may only contain EAA, i.e. consist of EAA only. The composite mixture may consist of cellulosic fibers, a thermoplastic matrix essentially containing ethylene acrylic acid copolymer and no or at least one additive. According to the present invention, said composite mixture may contain cellulosic fibers in the range of from 10 to 40 weight% such as the range is from 20 to 40 weight%, such as the range is from 25 to 35 weight%, such as the range is from 28 to 30 weight%. Furthermore, the composite may contain 25, 26, 27, 28, 29, 30, 31, 32, 33, 34 or 35 weight% cellulosic fibers. The length of the cellulosic fibers used in the composite mixture according to the present invention as defined hereinabove or hereinafter is in the range of from 0.1 to 6.0 mm. However, other suitable lengths of the cellulose fibers are in the range of from 0.1 to 1.5 mm, from 0.3 to 3.0 mm, and from 2.0 to 5.0 mm. The length of the cellulosic fibers depends on the type of cellulosic fiber being used. Further, the ethylene acrylic acid copolymer used in the composite mixture according to the present invention as defined hereinabove or hereinafter comprises acrylic acid in the range of from 3 to 10 weight%, such as 7 weight% acrylic acid, such as 3 weight% acrylic acid, such as 4, 5 or 6 weight% acrylic acid. However, the EAA may comprise up to 20 weight% acrylic acid.

The present invention also relates to the use of the composite mixture of the present invention for manufacturing a fiber-reinforced composite.

The present invention relates to a method for manufacturing a fiber-reinforced composite mixture comprising from 10 to 40 weight% cellulosic fibers, a thermoplastic matrix and no or at least one additive characterized in that said method comprises the steps:

> a) preparing a mixture comprising cellulosic fibers in the range of from 10 to 70 weight%, no or at least one additive and a thermoplastic matrix;
> b) passing the mixture obtained in step a) through a device that will provide an elongational flow of said mixture by using high pressure, i.e. a pressure of 100 bar or more, such as 1000 bar or more, such as 1250 bar or more.

The obtained elongational flow will break-up, i.e. disentangle the cellulosic fiber aggregates and orientate the cellulosic fibers in the flow direction of the melt. The cellulosic content may be reduced by adding additional thermoplastic matrix in step b) before the mixture obtained in a) is passed through the device. Further, according to the present invention, the method for manufacturing a fiber-reinforced composite mixture may also comprise an additional step b1) which is repeating step b) at least once or until a sufficient disintegration of fiber aggregates in the thermoplastic matrix has been obtained.

The present invention also relates to a method for manufacturing a fiber-reinforced composite comprising from 10 to 40 weight% cellulosic fibers, a thermoplastic matrix and no or at least one additive characterized in that said method comprises the steps:

> a) preparing a mixture comprising cellulosic fibers in the range of from 10 to 70 weight%, no or at least one additive and a thermoplastic matrix;
> b) passing the mixture obtained in step a) through a device that will provide an elongational flow of said mixture by using high pressure, i.e. a pressure of 100 bar or more;
> c) using the mixture obtained in step b) in an apparatus suitable for obtaining a fiber reinforced composite, such as an injection molding machine or extruder, whereby a fiber-reinforced composite is obtained.

The obtained elongational flow will break-up (disentangle) the cellulosic fiber aggregates and orientate the cellulosic fibers in the flow direction. The cellulosic content may be reduced by adding additional thermoplastic matrix before or in step b), i.e. before the mixture obtained in step a) is passed through the device.

Further, according to the present invention, the method for manufacturing a fiber-reinforced composite may also comprise an additional step b1) which is repeating step b) at least once or until a sufficient disintegration of fiber aggregates has been obtained. Step b1) is, as already mentioned, that step b) is repeated at least once, which means that the mixture is exposed to additional elongation dispersive mixing. The obtained mixture has a significantly reduced amount of fiber aggregates and a good dispersion and orientation of the fibers. It is to be understood that the mixture in step b) and b1) is in a molten state when passing through the device. Further, it is also to be understood that the elongational dispersive mixing may be obtained by other methods than using high pressure, such methods are known to the skilled person, e.g. such as calendaring rolls.

According to the present method for manufacturing a fiber-reinforced composite according as defined hereinabove or hereinafter, additional thermoplastic matrix may also be added to the mixture before or in step c). The additional thermoplastic matrix will facilitate adjustment of cellulosic fiber content and also facilitating controlling the flow characteristics of the mixture as the cellulose content is reduced.

The methods according to the present invention as defined hereinabove or hereinafter have the advantage of significantly reducing the amount of cellulosic fiber aggregates present in the mixture obtained after step b) due the elongation dispersive mixing. The elongational forces formed in the mixture in step b will break-up (disentangle) the fiber aggregates and also orient the cellulosic fibers in the flow direction. This will have the effect that there will be more cellulosic fibers dispersed in the thermoplastic matrix, thus there will be more fibers available for reinforcing the composite. This break-up of fiber aggregates will, as mentioned before provide better dispersion of the cellulosic fibers and also provide a more effective fiber-thermoplastic matrix interaction. In step b) the mixture is ejected from the device at high pressure, a pressure of at least 100 bar, i.e. 100 bar or more, such as 1000 bar or more, such as 1250 bar or more. The elongational forces that arise during the step will provide for a homogeneous elongational flow and the velocity gradient is formed by reducing the cross-section area in the flow direction. Hence, the methods according to the present invention as defined hereinabove or hereinafter will have, due to the elongation dispersive mixing, a very good influence on the mechanical performance of the composites obtained by said method as the obtained fiber-reinforced composite will have high tensile modulus and tensile strength.

According to the present invention, said mixture may be melted in step a) and the melting may be performed by melt mixing. According to the method for manufacturing a fiber-reinforced composite, the mixture may be pelletized before step c). The mixture does not have to be pelletized but can be used in step c) directly as a molten mixture. Further, according to the method for manufacturing a fiber-reinforced composite or a composite mixture as defined hereinabove or hereinafter, the mixture obtained from step a) may be pelletized before step b) and then melted in step b), before said mixture is passed through said device.

The thermoplastic matrix used in the present methods as defined hereinabove or hereinafter is selected from polyethylene, polypropylene or copolymers thereof. The thermoplastic matrix may also essentially contain ethylene acrylic acid copolymer or may contain ethylene acrylic acid copolymer only, i.e. consist of ethylene acrylic acid copolymer only. Said ethylene acrylic acid copolymer may comprise acrylic acid in the range of from 3 to 20 weight%, such as from 3 to 10 weight%, such as 3, 4, 5, 6, 7, 8, 9, 10 or 20 weight%. However, any thermoplastic polymer or combinations thereof can be used as a thermoplastic matrix in the methods according to the present invention as defined hereinabove or hereinafter, such as polyolefins or modified polyolefins.

The range of cellulosic fiber of the mixture obtained after step c) may be of from 20 to 40 weight%, such as from 25 to 35 weight%, such as from 28 to 30 weight%, such as 25, 26, 27, 28, 29, 30, 31, 32, 33, 34 or 35 weight% cellulosic fibers.

The present invention also relates to the use of the method of the present invention for manufacturing a composite of the present invention.

According to the present invention the device used for providing the elongation dispersive mixing may be a converging die. The converging die will elongate the mixture and align the fibers and the polymers parallel to the flow direction. The converging die is used at a high pressure as higher pressure facilitates higher ejection rate and thus increases the stresses for breaking-up the aggregates. The temperature used in the methods of the present invention as defined hereinabove or hereinafter is depending on the melting temperature of the thermoplastic matrix used. One example of an apparatus that may be used for the methods of the present invention is an injection molding machine.

According to the present invention the fiber-reinforced composites as defined hereinabove or hereinafter may comprise no more than 5 weight% compatibilizers and/or coupling agents, such as 4, 3, 2 or 1 weight% or less. Further, said fiber-reinforced composites as defined hereinabove or hereinafter may comprise no compatibilizers and/or coupling agents. Furthermore, said fiber-reinforced composites may comprise at least one additive selected from selected from the group consisting of talc, calcium carbonate, calcium hydroxide, barium sulfate, mica, calcium silicate, clay, kaolin, silica, alumina, wollastonite, magnesium carbonate, magnesium hydroxide, titanium oxide, titanium dioxide zinc oxide, zinc sulfate, and combinations thereof, and colorants, lubricants, process aids, heat stabilizers, light stabilizers, biocides and flame resistant agents.

The cellulose fibers are in a form (e.g. disentangled, defibrated) that will make it possible to feed them into a device, such as an agglomerator, which will provide the mixing, such as melt mixing, of the thermoplastic matrix and cellulosic fibers. The fibers may be obtained by e.g. grinding commercial cellulose sheets. The fibers and the thermoplastic matrix, which is in the form of e.g. pellets, are fed into the device. If said device is e.g. an agglomerator, agglomerates, as defined herein, will be obtained.

The present invention also relates to the use of the method according to the present invention for manufacturing a fiber-reinforced composite mixture of the present invention for manufacturing a fiber-reinforced composite according to the present invention. Further, the present invention also relates to the use of the method according to the present invention for manufacturing a fiber-reinforced composite according to the present invention.

The fiber-reinforced composites as defined hereinabove or hereinafter may be used as e.g. interior panel construction, household appliances, automotive parts, boat hulls, containers and packages, such as for food containers and packages. Said fiber-reinforced composites may also be used in electric and electronic products. Further, the skilled person is aware about other suitable applications.

Hence, the fiber-reinforced composites according to the present invention as defined hereinabove or hereinafter and fiber-reinforced composites obtained by the method according to the present invention as defined hereinabove or hereinafter will have excellent mechanical properties, such as stiffness and tensile strength as elongation dispersive mixing is a very effective process for breaking up the fiber aggregates and for dispersing and orienting the fibers. By breaking up the fiber aggregates, the surface contact area of the fibers will increase and the fibers will be more effectively used as reinforcement material with the consequent improvement of the mechanical properties. The composites produced by the methods of the present invention will have excellent stiffness and strength.

**Experimental section**

The present invention is further illustrated by the following non-limiting examples.

*Abbreviations*

cm     centimeter;
s      second;
mm     millimeter;
g      gram;
$cm^3$    cubic centimeter;
min    minute;
rpm    revolutions per minute;
$cm^2$    square centimeter;

*Introduction*

In the experimental section below, the melt processing and the tensile mechanical properties of composites have been studied. The cellulosic fibers used were obtained from softwood kraft pulp and the EAA contained 7 weight% acrylic acid.

Different processing techniques have been used to show the effectiveness of the method according to the present invention compared to other processing techniques. The prepared sample compositions were subjected to either extrusion mixing or elongation dispersive mixing and were then injection molded. The extrusion mixing was performed by using a single screw extruder at different screw rotation speeds. The elongation dispersive mixing was performed using an injection molding machine and by either using one melt ejection (one pass) or two on each other following melt ejections (two pass). The elongation dispersive mixing process was performed at high pressure (1250 bar) resulting in a high flow rate (56 cm/s).

The fiber length was measured by using flow cell equipment in order to decide the influence of the different processing techniques. This method was used to obtain the fiber length distribution and the width distribution. These values were calculated according to TAPPI T271 (0-7.60 mm) and ISO 16065 (0.20-7.00 mm) standards.

The homogeneity of the samples obtained from the different processing techniques was also studied. Soxhlet extraction was performed in order to determine the actual fiber content.

Sections of the obtained samples were collected in order to estimate the number and the size of the cellulosic fiber aggregates.

It is also possible to obtain some improvements in breaking up cellulose fiber bundles by using a barrier type of extruder screws, such as described in US 3358327.

*Material used*

*Cellulosic fibers*

The cellulosic fibers used were obtained from softwood kraft pulp from Södra (Södra Green). The fibers had a density of about 1.5 g/cm$^3$.
The agglomerates were obtained by using the Palltrution™ process method.
The cellulosic fibers were delivered as fiber web sheet and the cellulosic fibers had to be separated from each other in order to be able to feed them into the agglomerator (i.e. the apparatus for manufacturing the agglomerates). The cellulose sheets were ground in a grinding machine with a rotor and a stator. Both rotor and stator were provided with knives arranged to cut the cellulosic fibers when the rotor was rotating. Beneath the stator was a sieve that defined the particle size of the grinded material. The dimension of the holes in the sieve was 0.5 mm.
The grinded cellulosic fibers aggregates and the EAA pellets were gravimetrically fed into the agglomerator and the EAA was melted as the agglomerator had a temperature of about the melting temperature of EAA, i.e. around 100 °C. The fibers and the EAA attached to each other due to the friction heat created by the screw rotation and the obtained EAA-cellulosic fiber material was squeezed through multiple die orifices at the perimeter of the die head and cut by rotating knives and thus formed agglomerates. The agglomerates obtained contained EAA and 30 or 70 weight% cellulosic fibers. The moisture content of the agglomerates after the agglomeration process was less than 1 weight%.

*EAA*

The EAA used was *Primacor® 3540* from Dow Chemical Company. The EAA had a 7 weight% acrylic acid content, melt flow rate (190°C/2.16 Kg, ISO 1133) of 8 g/10 min and density of 0.932 g/cm$^3$. The EAA was in the form of pellets.

*Samples*

The agglomerates containing 30 weight% cellulosic fibers were referred to as reference A30 and the agglomerates containing 70 weight% cellulosic fibers were referred to as masterbatch A70. The samples made from the A30 were referred to as 30.
Samples were also prepared by mixing the masterbatch A70 with additional EAA, in order to obtain a composition having about 30 weight% cellulosic fiber content. The masterbatch A70 and the additional EAA were premixed by hand, both masterbatch A70 and the additional EAA were in solid form. This composition was referred to as 30(70). However, the skilled person will recognize that other methods can be used for mixing said components in order to obtain the same composition.

*Processing techniques*

The different processing techniques used were:

 a) injection molding, (IM)
 b) extrusion mixing (EM)
 c) elongation dispersive mixing (EDM)

a) injection molding

A30 was directly injection molded. The obtained sample is referred to as 30 IM. 30(70) was directly injection molded. The obtained sample is referred to as 30(70) IM.
The injection molding was performed using Arburg ALLROUNDER, 221M-250-55. The temperature profile used was 90, 130, 140, 150 and 150°C, the injection pressure was 1000 bar, cycle time 50 s and the mold was at room temperature.

b) extrusion mixing

A30 was passed through an extrusion machine (extrusion mixing of A30) wherein mixing took place. The maximum screw speed was 150 rpm (revolutions per minute). After the extrusion mixing the obtained mixture was injection molded. The obtained sample is referred to as 30 EM.
The sample referred to as 30(70) was passed through an extrusion machine (extrusion mixing of 30(70) at different screw speeds: 50, 85, 100 and 150 rpm. After the extrusion mixing, the obtained mixture was injection molded.

The obtained samples are referred to as 30(70) 50, 85, 100 and 150 rpm respectively.

The extrusion mixing was performed with a Brabender® compact extruder, Brabender OHG, Duisburg, Germany. The extruder had a screw diameter D = 19 mm and a screw length of 25D, three individually controlled temperatures zones and a temperature-controlled circular die with a diameter 3 mm. The temperature profile along the barrel from hopper to die was 90, 130, 140, 140°C. The screw rotation speeds used were 50, 85, 100 and 150 rpm (150 rpm was the maximum speed).

c) Elongation dispersive mixing

Elongation dispersive mixing was performed to A30. After the elongation dispersive mixing had been performed once, part of the obtained mixture was removed and injection molded and the obtained sample was referred to as 30; 1 pass. The other part of the mixture was again subjected to elongation dispersive mixing at maximum pressure and then injection molded. The obtained sample was referred to as sample 30; 2 passes.

Elongation dispersive mixing was performed to masterbatch A70. After elongation dispersive mixing had been performed once, part of the obtained mixture was removed and was again subjected to one additional elongation dispersive mixing. The obtained samples from both mixing processes were hand-mixed with additional EAA pellets in order to obtain a cellulosic fiber content of the samples of 30 weight%. After this step, the obtained compositions were injection molded and the samples were referred to as samples 30(70);1 pass and 30(70);2 passes. Hence, the additional EAA is added in order to be able to inject the material into the mold.

Elongation dispersive mixing was performed by using an injection molding machine, Arburg ALLROUNDER, 221M-250-55, Austria. Elongation dispersive mixing of the batches A30 and A70 was performed at the maximum pressure and flow rate. The temperature profile from the hopper to the die was 90, 130, 140, 150, 150°C, the pressure was 1250 bar and the flow rate 56 cm³/s. The screw diameter was 25 mm and the nozzle die diameter 2 mm.

The injection molding was performed using Arburg ALLROUNDER, 221M-250-55. The temperature profile used was 90, 130, 140, 150 and 150°C, the injection pressure was 1000 bar, cycle time 50 s and the mold was at room temperature.

*Calculations*

The elongational strain ($\varepsilon$) and the elongational rate ($\varepsilon^*$) were calculated by using Eq. (1) and Eq. (2), assuming constant volume flow (Tadmor, Z.G., Gogos C.G.; "Principles of polymer processing", Wiley-Interscience, 1979). The obtained values were 5.05 for the elongational strain and 140 s$^{-1}$ for the elongational rate

$$\varepsilon = \ln\left(\frac{r_0^2}{r^2}\right) \qquad (1)$$

wherein $r_0$ is the radius of the cylinder and $r$ is the radius of the nozzle die.

$$\varepsilon^* = \frac{v_1 - v_0}{L} \qquad (2)$$

wherein $v_0$ is the speed in the cylinder, $v_1$ is the speed at the nozzle and L is the length comprising the nozzle length and the nozzle tip length.

*Testing*

*1. Tensile testing*

The tensile mechanical properties, i.e. the tensile modulus, tensile strength and strain at fracture were measured according to ISO527-1 with a Zwick® 1455 tensile testing machine, Germany, which was equipped with free-standing clip-on extensometer with adjustable gauge length. A cross-head speed of 6 mm/min, corresponding to a strain rate of about 1.4x10$^{-3}$ s$^{-1}$, was used and the gauge length of the extensometer was 60 mm. The measurements were performed at 23°C ± 0.5°C.

*2. Fiber length measurements*

The fiber length measurements were performed by using an optical analyzer Kajaani® FS300, Metso Automation, Finland. The method was based on light polarization measurements of the fibers in water. The samples were prepared accordingly: The polymer was extracted from the samples with xylene and then the cellulosic fibers were washed with water and kept in water before the measurements were performed. With this method, the fiber length distribution and the width distribution were obtained and they were calculated according to TAPPI T271 0-7.60 mm and ISO 16065 0.20-7.00 mm standards. The values given in Table 1 are the result of five measurements for the A30 agglomerates and sixteen measurements for the A70.

*3. Fiber content*

The actual fiber content was measured for some of the samples. A small piece of each sample was cut and weighed before extracting (Soxhlet) the polymer with xylene during approximately 72 h. After this time, the thimble (which is a type of filter in the shape of a small vessel, used when performing Soxhlet extraction) containing the cellulosic fibers was dried at room temperature, weighed, whereby the fiber content was determined.

*4. Microscopy image analysis*

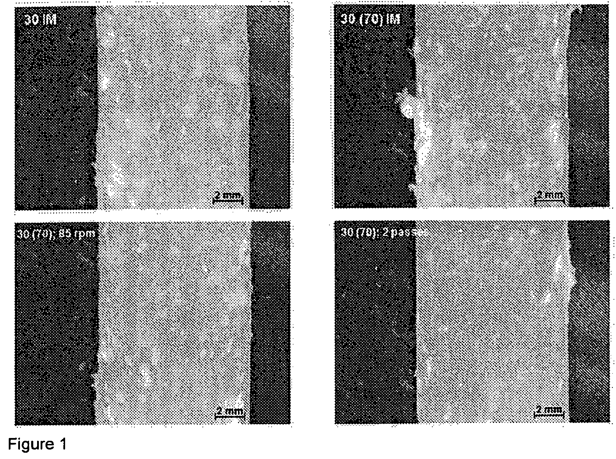

The center of the injection molded samples was milled from 4 mm thickness to 1 mm thickness in order to determine the size and number of cellulose aggregates by using microscope analysis. The samples were analyzed with a stereomicroscope type SteREO discovery.V20 from Carl Zeiss, Germany. The microscopy pictures are shown in Fig.1. The total characterized area was 1 x 2 cm$^2$. From the obtained pictures, the fiber aggregates were measured by hand and counted.

*Results and discussion*

a. *Visual characterization*

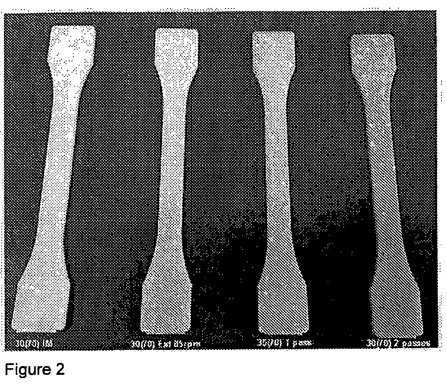

The injection molded samples were made from the compositions containing masterbatch A70 and EAA, denoted 30(70) (figure 2). Samples obtained by direct injection molding contained more fiber aggregates compared to those obtained by elongation dispersive mixing. The samples obtained by using the elongation dispersive mixing method according to the present invention contained a significantly reduced amount of aggregates as can especially be seen from the samples that had been elongation dispersive mixed twice.

b. *Microscopy image characterization*

This characterization method was used in order to verify that elongation dispersive mixing is a successful method to break up the aggregates and disperse the cellulosic fibers (see figure 1). The amount of aggregates in the samples obtained by elongation dispersive mixing was considerably lower than the other obtained samples. This can especially been seen for the samples that have been elongation dispersive mixed twice.

c. *Fiber content*

The measured fiber content of some samples is shown in Table 1.
The fiber content of the as-received cellulose aggregates, reference A30 and masterbatch A70, was also measured; being for the reference A30 34 weight % and 67 weight % for the masterbatch A70. The injection molded reference A30 did not show any change in fiber content but when the masterbatch A70 with EAA, sample 30 (70) IM was injection molded, the cellulose content of the batches slightly decreased to 28 weight %. After extrusion mixing, the cellulose content increased up to 36 weight %, which was the highest among all the measured samples.
Even though the samples obtained by elongation dispersive mixing had a slightly lower value of the measured cellulose content than the samples obtained by the other processing techniques, said samples exhibited the best mechanical properties of all, i.e. the best stiffness and tensile strength. This indicates that the elongation dispersive mixing is a very efficient method for breaking up the fiber aggregates and also for dispersing and orienting the fibers. By breaking up the agglomerates, the surface contact area of the fibers will increase which mean that the fibers will be used as reinforcement more efficiently with the consequent improvement of the mechanical properties.

*d. Fiber length*

The fiber length of the original cellulosic fibers, before the formation of the agglomerates A30 and masterbatch A70, was 2.45 mm with the standard deviation 0.15 mm based on three measurements. The diameter was also measured, being about 30 $\mu$m for all measured fibers. During the agglomeration process, however, the fiber length was reduced to 0.55 mm for the reference A30 and to 0.48 mm for the masterbatch A70. The reduced fiber lengths corresponded well to the grinding screen used during the agglomeration process. The standard deviations were 0.02 and 0.03 mm respectively. The fiber lengths shown in Table 1, indicate that the further melt processing has an insignificant effect on the fiber length as all the measurements were in the same range after the agglomeration process. However, if the small differences in fiber length between the samples are taken into account, it could be observed that the sample 30(70); 2 passes had the shortest fibers but the best mechanical properties of all samples.

*e. Tensile properties*

The measured mechanical properties are summarized in Table 1. All the values are averages values and the standard deviation is included. The corresponding properties of the EAA, without any fiber, were also measured and given as reference values. As can be seen from the table below, by adding cellulosic fibers to the EAA matrix, the tensile modulus (E) and the tensile strength ($\sigma$) are increased and the elongation at break ($\varepsilon$) is decreased. As can also be seen from Table 1, the processing had a significant effect on the mechanical properties of the samples and that the elongation dispersive mixing resulted in improved tensile mechanical properties for the samples.

Table 1

| Samples | | Measured fiber content (%) | E (MPa) | $\sigma$(MPa) | $\varepsilon$ (%) | Fiber length (mm) |
|---|---|---|---|---|---|---|
| Direct injection molding | EAA | - | 118 (18) | 12.4 (0.1) | 76 (2) | - |
| | 30 IM | 30 | 630 (37) | 13.4 (0.3) | 10 (1) | 0.49 (0.00) |
| | 30 (70) IM | 28 | 652 (64) | 16.3 (0.7) | 10 (2) | 0.45 (0.01) |
| Extrusion mixing | 30; 150rpm | - | 588 (45) | 14.1 (1.0) | 10(2) | - |
| | 30(70); 50 rpm | - | 694 (76) | 13.7 (0.1) | 12(2) | 0.41 (0.01) |
| | 30(70); 85 rpm | 36 | 780 (64) | 1 5.2 (0.5) | 9 (1) | 0.44 (0.00) |
| | 30(70); 100 rpm | 31 | 585 (44) | 13.4 (0.2) | 11 (1) | 0.46 (0.00) |
| | 30(70); 150 rpm | - | 577 (21) | 13.0 (0.2) | 12 (1) | - |
| Elongation dispersive mixing | 30; 1 pass | - | 701 (25) | 14(0.2) | 10 (1) | - |
| | 30; 2 passes | - | 750 (51) | 15(0.3) | 8 (1) | - |
| | 30 (70); 1 pass | 31 | 639(111) | 15.6 (1.0) | 13(3) | 0.43 (0.00) |
| | 30 (70); 2 passes | 25 | 785 (90) | 18.2 (0.7) | 12(2) | 0.38 (0.04) |

*f. Results*

As can be seen from Table 1, the best results are obtained for samples having two elongation dispersive mixing before being processed by injection molding. The elongational dispersive mixing has dispersed the aggregates much more than any known technique; hence the samples contain significantly reduced amounts and size (diameter) of the aggregates. The elongation dispersive mixing has thus broken-up sufficient amounts of aggregates and dispersed the untangled fibers in the thermoplastic matrix and furthermore also oriented the fibers in the thermoplastic matrix.

**References**

1. US 2003/0228454
2. J. Zhang et al. (J. Appl. Polymer Sci. 113, 2081-2089, (2009))
3. J. Morán et al. (J. Appl. Polymer Sci. 103, 228-237 (2007))
4. US 5709933
5. WO 99/56936
6. US 2009/0130443
7. EP 1070782
8. US 3358327

**Claims**

1. A method for manufacturing a fiber-reinforced composite comprising from 10 to 40 weight% cellulosic fibers and a thermoplastic matrix.
**characterized in that** said method comprises the steps:

   a) preparing a mixture comprising cellulosic fibers in the range of from 10 to 70 weight%, and a thermoplastic matrix;
   b) passing the mixture obtained in step a) through a device providing an elongational flow of said mixture by application of a pressure of 100 bar or more,
   c) using the mixture obtained in step b) in an apparatus suitable for obtaining a fiber-reinforced composite whereby a fiber-reinforced composite is obtained.

2. The method according to claim 1, wherein the mixture in step a) further comprises at least one additive.

3. The method for manufacturing a fiber-reinforced composite according to claim 1 or 2, whereby the apparatus suitable for obtaining a fiber-reinforced composite is an injection molding machine or an extruder.

4. The method for manufacturing a fiber-reinforced composite according to any one of claims 1 to 3, wherein said method comprises an additional step, step b1) which is repeating step b) at least once.

5. The method for manufacturing a fiber-reinforced composite according to any one of claims 1 to 4, wherein additional thermoplastic matrix is added to the mixture before or in step b).

6. The method for manufacturing a fiber-reinforced composite according to any one of claims 1 to 5 , wherein additional thermoplastic matrix is added to the mixture before or in step c).

7. The method for manufacturing a fiber-reinforced composite according to any one of claims 1 to 6, wherein said thermoplastic matrix is selected from polyethylene, polypropylene or copolymers thereof or wherein said thermoplastic matrix essentially contains ethylene acrylic acid copolymer.

8. A fiber-reinforced composite manufactured by the method for manufacturing a fiber- reinforced composite according to any one of claims 1 to 7.

9. Use of a composite according to claim 8 as interior panel construction, household appliances, automotive parts, boat hulls, containers and food packages.

**10.** Use of elongational flow to break up cellulose fiber aggregates in a thermoplastic matrix and orient the cellulosic fibers in the elongational flow direction.

## Patentansprüche

**1.** Verfahren zur Herstellung eines faserverstärkten Verbundwerkstoffs, der 19 bis 40 Gew.-% Zellulosefasern und eine thermoplastische Matrix enthält,
**dadurch gekennzeichnet, dass** das Verfahren die folgenden Schritte umfasst:

a) Herstellung eines Gemisches, das Zellulosefasern im Bereich von 10 bis 70 Gew.-% und eine thermoplastische Matrix enthält;
b) Überleiten des in Schritt a) hergestellten Gemisches durch eine Vorrichtung, die eine Dehnströmung in dem Gemisch durch Aufbringen eines Drucks von mindestens 100 bar herbeiführt,
c) Einsetzen des in Schritt b) erhaltenen Gemisches in einer Vorrichtung, die sich dazu eignet, einen faserverstärkten Verbundwerkstoff zu erhalten, wodurch ein faserverstärkter Verbundwerkstoff erhalten wird.

**2.** Verfahren nach Anspruch 1, bei welchem das Gemisch aus Schritt a) des Weiteren mindestens einen Zuschlagstoff enthält.

**3.** Verfahren zur Herstellung eines faserverstärkten nach Anspruch 1 oder 2, bei welchem es sich bei der Vorrichtung, die sich dazu eignet, einen faserverstärkten Verbundwerkstoff zu erhalten, um eine Spritzgussmaschine oder eine Strangpresse handelt.

**4.** Verfahren zur Herstellung eines faserverstärkten Verbundwerkstoffs nach einem der Ansprüche 1 bis 3, wobei das Verfahren einen zusätzlichen Schritt, nämlich Schritt b1), umfasst, der in einer mindestens einmaligen Wiederholung von Schritt b) besteht.

**5.** Verfahren zur Herstellung eines faserverstärkten Verbundwerkstoffs nach einem der Ansprüche 1 bis 4, bei welchem vor oder in Schritt b) dem Gemisch eine zusätzliche thermoplastische Matrix zugesetzt wird.

**6.** Verfahren zur Herstellung eines faserverstärkten Verbundwerkstoffs nach einem der Ansprüche 1 bis 5, bei welchem vor oder in Schritt c) dem Gemisch eine zusätzliche thermoplastische Matrix zugesetzt wird.

**7.** Verfahren zur Herstellung eines faserverstärkten Verbundwerkstoffs nach einem der Ansprüche 1 bis 6, bei welchem die thermoplastische Matrix aus der Gruppe gewählt wird, die Polyethylen, Polypropylen oder deren Kopolymere enthält, oder bei welchem die thermoplastische Matrix im Wesentlichen ein Ethylen-Acrylsäure-Kopolymer enthält.

**8.** Faserverstärkter Verbundwerkstoff hergestellt nach dem Verfahren zur Herstellung eines faserverstärkten Verbundwerkstoffs nach einem der Ansprüche 1 bis 7.

**9.** Verwendung eines Verbundwerkstoffs nach Anspruch 8 als Plattenkonstruktion für den Innenausbau, für Haushaltsgeräte, Kraftfahrzeugteile, Bootsrümpfe, Behälter und Lebensmittelverpackungen.

**10.** Heranziehung der Dehnströmung zum Aufbrechen von Zellulosefaser-Aggregaten in einer thermoplastischen Matrix und zum Ausrichten der Zellulosefasern in Richtung der Dehnströmung.

## Revendications

**1.** Procédé de fabrication d'un composite renforcé par des fibres comprenant 10 % à 40 % en poids de fibres cellulosiques et une matrice thermoplastique,
**caractérisé en ce que** ledit procédé comprend les étapes suivantes :

a) la préparation d'un mélange comprenant des fibres cellulosiques dans la plage de 10 % à 70 % en poids et une matrice thermoplastique ;
b) le passage du mélange obtenu dans l'étape a) à travers un dispositif fournissant un écoulement étiré dudit mélange par l'application d'une pression supérieure ou égale à 100 bar,

c) l'utilisation du mélange obtenu dans l'étape b) dans un appareil approprié pour obtenir un composite renforcé par des fibres, moyennant quoi un composite renforcé par des fibres est obtenu.

2. Procédé selon la revendication 1, dans lequel le mélange dans l'étape a) comprend en outre au moins un additif.

3. Procédé de fabrication d'un composite renforcé par des fibres selon la revendication 1 ou 2, moyennant quoi l'appareil approprié pour obtenir un composite renforcé par des fibres est une machine de moulage par injection ou une machine d'extrusion.

4. Procédé de fabrication d'un composite renforcé par des fibres selon l'une quelconque des revendications 1 à 3, dans lequel ledit procédé comprend une étape supplémentaire, l'étape b1) qui est la répétition de l'étape b) au moins une fois.

5. Procédé de fabrication d'un composite renforcé par des fibres selon l'une quelconque des revendications 1 à 4, dans lequel la matrice thermoplastique supplémentaire est ajoutée au mélange avant ou dans l'étape b).

6. Procédé de fabrication d'un composite renforcé par des fibres selon l'une quelconque des revendications 1 à 5, dans lequel la matrice thermoplastique supplémentaire est ajoutée au mélange avant ou dans l'étape c).

7. Procédé de fabrication d'un composite renforcé par des fibres selon l'une quelconque des revendications 1 à 6, dans lequel ladite matrice thermoplastique est choisie parmi un polyéthylène, un polypropylène ou des copolymères de ceux-ci ou dans laquelle ladite matrice thermoplastique contient essentiellement un copolymère d'éthylène/acide acrylique.

8. Composite renforcé par des fibres fabriqué par le procédé de fabrication d'un composite renforcé par des fibres selon l'une quelconque des revendications 1 à 7.

9. Utilisation d'un composite selon la revendication 8 comme composition de panneau d'intérieur, appareils électroménagers, parties d'automobile, coques de bateau, récipients et emballages pour aliment.

10. Utilisation d'un écoulement étiré pour casser les agrégats de fibres cellulosiques dans une matrice thermoplastique et orienter les fibres cellulosiques dans la direction de l'écoulement étiré.

Figure 1

Figure 2

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030228454 A
- US 5709933 A
- WO 9956936 A
- US 20090130443 A
- US 5985429 A
- EP 1070782 A
- US 3358327 A
- US 5709933 B

**Non-patent literature cited in the description**

- **J. ZHANG et al.** *J. Appl. Polymer Sci.,* 2009, vol. 113, 2081-2089
- **J. MORÁN et al.** *J. Appl. Polymer Sci.,* 2007, vol. 103, 228-237
- **TADMOR, Z.G. ; GOGOS C.G.** Principles of polymer processing. Wiley-Interscience, 1979